# EUROPEAN PATENT APPLICATION

(11) **EP 0 648 540 A1**
(43) Date of publication of application: **19.04.1995**
(21) Application number: 94202911.7
(22) Date of filing: 07.10.1994
(51) Int. Cl.: B02C 23/36, B09B 3/00

(54) **Method and installation for environmentally friendly treatment of waste products such as asbestos**

(30) Priority: 15.10.1993 NL 9301790
(71) Applicant: Van Der Nagel, Cornelis Johannes, NL-3124 LC Schiedam (NL)
(72) Inventor: Van Der Nagel, Cornelis Johannes, NL-3124 LC Schiedam (NL)
(74) Representative: de Bruijn, Leendert C.

(57) **Abstract**

Method for the treatment of waste products which have aspects hazardous to health to produce a non-hazardous product or substance, by encapsulating said waste products, such as, for example, products containing asbestos or rock dust, with which method said products are ground, chopped or comminuted in some other way, in a chamber (1) which is completely isolated from the surroundings and from the operators, to produce small particles in such a way that said products pass during and/or immediately after comminution into a liquid (11) which engulfs the particles obtained and the particles encapsulated in this way are removed and/or packaged under airtight conditions. The invention also comprises an installation with which a road surface which, for example, contains asbestos can be cleared away.

## Description

The invention relates to a method for the treatment of waste products which have aspects hazardous to health to produce a non-hazardous product or substance, by encapsulating said waste products, such as, for example, products containing asbestos or rock dust.

It is nowadays generally known, and also a legal requirement, that waste products which are hazardous to health, in particular asbestos products which, for example, are released during demolition work, must be packed in plastic before they are handed over to waste treatment companies. This demands a very large quantity of plastic. Moreover, it is a legal requirement that employees carrying out this packaging must have a one hour break after every two hour work period. As asbestos-containing products, such as corrugated sheeting, are frequently encountered during demolition work, the treatment of asbestos-containing products is an expensive and unpleasant operation.

Apart from asbestos there are, of course, other substances which are unhealthy, for example products which contain or produce rock dust and which, for example, can give rise to pneumoconiosis.

The aim of the invention is to provide a method and installation with which it is possible, in a very simple and inexpensive manner, to treat these products which are hazardous to health, such as asbestos, in such a way that packaging in plastic is no longer required and said making safe of said hazardous products can be carried out not only by companies equipped for this purpose but also on site using a relatively small, for example mobile, installation of suitable design.

This aim is achieved according to the invention firstly in that said products are ground, chopped or comminuted in some other way, in a chamber which is completely isolated from the surroundings and from the operators, to produce small particles in such a way that said products pass during and/or immediately after comminution into a liquid which engulfs the particles obtained and the particles encapsulated in this way are removed and/or packaged under airtight conditions.

It is necessary, therefore, merely to feed the waste products via a suitably dimensioned inlet opening into the container in which said products are then comminuted to produce particles which pass into a liquid which completely engulfs them, after which the particles can be removed in the encapsulated state in an airtight manner. There is thus no risk whatsoever of particles escaping from the container, which risk can be further counteracted by ensuring, in accordance with the invention, that a reduced pressure is maintained above the liquid in the chamber.

The liquid can be essentially water, in which case the particles and the water form a slurry, which, via the discharge, can be transferred by means of the conveyor installation into a sealable reservoir or tank which is connected to the discharge in an airtight manner.

The liquid into which the particles pass can also be a liquid which sets or is capable of setting, in which case the discharge is carried out in such a way that shaped compacts are formed.

The slurry issuing from the discharge can then, for example, be transferred into channels or the like in which the slurry sets. Examples of a liquid which is suitable for this purpose are a liquid which contains cement or a liquid which contains bitumen.

The preferably mobile installation according to the invention which is suitable for carrying out the method preferably comprises, in accordance with the invention, a closed container having an inlet opening provided with an automatic seal or air lock, a grinding or crushing device close to the inlet opening, and a discharge conveyor which runs from the base of the container to or through the discharge opening in a manner such that it is isolated from the outside air. Said container must have a liquid feed, which is located above the level of the liquid in order to maintain the level in the container. After all, said level falls when discharge takes place. Said liquid feed can, for example, comprise sprinklers which are mounted high up in the container. Said sprinklers can then be located above the grinding device, as a result of which the latter is also cleaned if the sprinklers are water sprinklers.

In order absolutely to prevent the escape of air, the container can be connected, above the level of the liquid, to a suction box provided with a filter. Said filter then collects any particles still floating above the liquid.

The feed and discharge must, of course, be such that there is no ingress of air via said feed and no particles are able to escape to the outside via said discharge. This is achieved according to the invention in a simple manner in that the inlet and/or outlet have a funnel mouth, inside or outside the container, into which the liquid level of the liquid in the container extends to a height such that ingress of air via the inlet or outlet can not occur. Furthermore, an automatic seal, for example in the form of an elastic strip, can be present at the location of the inlet.

The discharge conveyor can be a screw conveyor which extends from the lower end via a funnel-shaped base through a pipe forming the outlet. A discharge conveyor or screw conveyor of this type can convey the aqueous slurry to a collecting reservoir or tank, but can also be used as an extruder if a liquid capable of setting is used.

If the liquid is bitumen, the container can be provided with heating means to heat the contents if required, if ambient temperature is such that this is necessary.

The invention will now be explained in more detail with reference to the drawings.

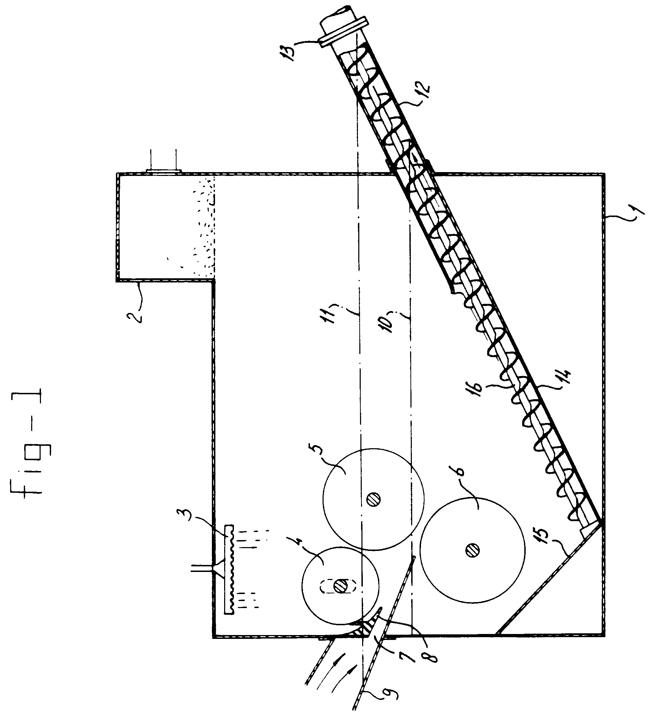

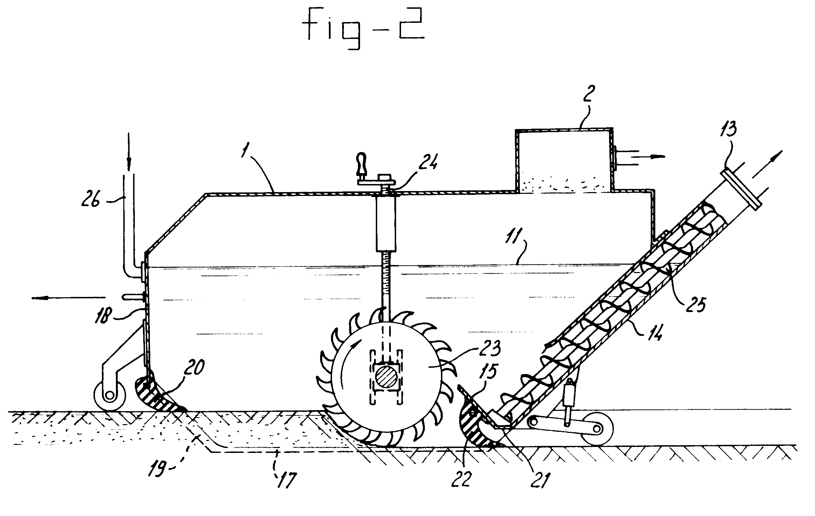

The drawings show possible embodiments of the installation according to the invention diagrammatically in cross-section in Figs 1 and 2.

The installation shown in Fig. 1 comprises a container 1 which has side walls, a base and a top. A filter box 2, provided with a suction fan and filter, which are not shown in more detail, is located on the top.

Sprinklers via which liquid can be fed into the container are indicated at 3.

The grinding device is indicated by the feed roller 4 and grinding rollers 5 and 6 respectively. Said rollers are located close to an inlet opening 7, which is sealable by means of an elastic strip 8, which is fixed by its top edge in the inlet opening 7 in such a way that it can move aside inwards in order to permit a waste product to be fed in. The base 9 of a funnel-shaped inlet is located in front of the inlet opening 7. The liquid level must be at least at the height of the line 10 in order to ensure that the small particles obtained using the grinding rollers 5 and 6 pass directly into the liquid. However, said level is preferably at the height of the line 11, as a result of which said level also extends into the inlet funnel 9 and into the outlet.

The outlet comprises a pipe 12, which projects some distance outside the container 1 and at its outer end has a connection 13, which is not shown in more detail, for connecting, for example, a sack, tank or another reservoir thereto. The underside of the pipe 12 adjoins a sloping base 14, which together with a second sloping base 15 forms a funnel which ensures that the particles in the liquid collect at the bottom in order to pass into the initial region of the conveyor installation. Said conveyor installation preferably comprises a screw conveyor 16, which discharges the slurry formed in the tank in the direction of the mouth section of the pipe 12.

The embodiment in Fig. 2 is an installation for clearing away a layer composed of asbestos/cement, such as a road surface.

As far as is clear, the same reference numerals as in Figure 1 have been used.

In this case the container 1 rests with the bottom edges of the side walls on the ground . Said bottom edges 17 preferably have a sharp edge in order to obtain a seal by penetration into the ground.

A mouth 19, which has a sealing strip, for example a rubber flap or roll 20, is located at the bottom of the front wall 18.

The rear wall 21 likewise has an elastic seal 22.

The sharp bottom edges 17 and the seals 20 and 22 must provide a liquid-tight seal.

A cutter 23, the height of which is adjustable, for example by means of the screwed spindle 24, is located in the container. Said cutter cuts away the road surface, the loosened particles of which are then in the liquid, the level of which is indicated at 11.

14 and 15 are base plates which form a funnel from which, in turn, the conveyor screw 25 provides for removal of the slurry of water and particles. There is a water feed at 26.

## Claims

1. Method for the treatment of waste products which have aspects hazardous to health to produce a non-hazardous product or substance, by encapsulating said waste products, such as, for example, products containing asbestos or rock dust, characterised in that said products are ground, chopped or comminuted in some other way, in a chamber (1) which is completely isolated from the surroundings and from the operators, to produce small particles in such a way that said products pass during and/or immediately after comminution into a liquid (11) which engulfs the particles obtained and the particles encapsulated in this way are removed and/or packaged under airtight conditions.

2. Method according to Claim 1, characterised in that a reduced pressure is maintained above the liquid in the chamber (1).

3. Method according to Claim 1 or 2, characterised in that the liquid is essentially water and the airtight removal takes place into sealable reservoirs or tanks.

4. Method according to Claim 1 or 2, characterised in that the liquid is a liquid which sets or is capable of setting and removal takes place in a manner such that shaped compacts are formed.

5. Method according to Claim 4, characterised in that the liquid contains cement.

6. Method according to Claim 4, characterised in that the liquid contains bitumen.

7. Installation for carrying out the method according to one or more of the preceding claims, characterised in that said installation comprises a closed container (1) having an inlet opening provided with an automatic seal or air lock, a grinding or crushing device close to the inlet opening, and a discharge conveyor which runs from the base of the container to or through the discharge opening in a manner such that it is isolated from the outside air.

8. Installation according to Claim 7, characterised in that the container has a liquid feed above the level of the liquid in order to maintain the level in the container.

9. Installation according to Claim 7 or 8, characterised in that the container is connected, above the level of the liquid, to a suction box provided with a filter.

10. Installation according to Claim 7, 8 or 9, characterised in that the inlet and/or outlet have a funnel mouth, located inside or outside the container, into which the liquid level of the liquid in the container extends to a height such that ingress of air via the inlet or outlet can not occur.

11. Installation according to one or more of the preceding Claims 7 to 10, characterised in that the discharge conveyor is a screw conveyor which extends from the lower end via a funnel-shaped base through a pipe forming the outlet.

12. Installation according to one or more of Claims 7 to 11, characterised in that the container has side walls which have razor-sharp bottom edges (17), a mouth (19), the top of which is located at a higher level and is provided with a seal (20), and a sealed rear edge (21, 22).

13. Installation according to Claim 12, characterised in that the height of the grinding or crushing device is adjustable.
